# NOUVEAU FASCICULE DE BREVET EUROPEEN

(11) **EP 0 291 382 B2**
(45) Date de publication et mention de la décision concernant l'opposition: **23.07.1997**
(45) Mention de la délivrance du brevet: 28.08.1991
(21) Numéro de dépôt: 88401058.8
(22) Date de dépôt: 29.04.1988
(51) Int. Cl.: H04Q 11/04

(54) **Système de commutation numérique**
Digitales Vermittlungssystem
Digital switching system

(30) Priorité: 15.05.1987 FR 8706845
(43) Date de publication de la demande: 17.11.1988
(73) Titulaire: THOMSON-CSF, 75008 Paris (FR)
(72) Inventeur: Berry, Georges, F-75008 Paris (FR); Woillez, Jean-Paul, F-75008 Paris (FR); Lohier, Hervé, F-75008 Paris (FR)
(74) Mandataire: Courtellemont, Alain

(56) Documents cités:
- EP-A- 0 185 936
- WO-A-85/05241
- DE-A- 3 328 405
- US-A- 4 228 536
- PROCEEDINGS OF THE INTERNATIONAL SWITCHING SYMPOSIUM, Florence, 7-11 mai 1984, pages 1-5, partie 1, session 23, "paper" 5, Amsterdam, NL; K.E. HUHN et al.: "System architecture of a future oriented complete digital PABX family"

## Description

La présente invention se rapporte à un système de commutation numérique entre n joncteurs (n entier supérieur à 1) et plus particulièrement à un système de commutation numérique destiné à l'exploitation de communications de sécurité telles que contrôle de trafic aérien et maritime. Dans un système de commutation numérique le joncteur sert d'interface pour les postes opérateurs, les différentes voies radio, les lignes téléphoniques...

De tels systèmes sont connus dans lesquels tous les joncteurs sont reliés à une unité centrale de commande et à un réseau central de connexion qui sont associés pour recevoir les informations des différents joncteurs du système et commander les interconnexions de joncteurs. L'architecture très centralisée de ces systèmes de commutation fait que l'ensemble complexe constitué par l'unité centrale de commande et le réseau central de commutation, lorsqu'ils sont sujets à une panne, peuvent entraîner une paralysie totale du système.

Il est connu par le brevet US-A-4228536 de réaliser un système de commutation modulaire qui permet de s'affranchir d'une unité centrale de commande afin que la panne d'une unité de commutation n'entraîne pas une panne totale du système ; chaque joncteur possède, pour cela, sa propre unité de commande avec détecteurs de panne. Il est également connu de ce même document qu'il existe une connexion directe entre les différentes unités individuelles de commutation afin de permettre une simplification dans le traitement des signaux de commande.

Un autre document peut également être mentionné ici; il s'agit d'un article : Proceedings of the International Switching Symposium, Florence, 7-11 mai 1984, pages 1-5, partie 1, session 23, K.E. HUHN "System architecture of a future oriented complete digital PABX famly". Ce document divulgue une architecture de réseau de commutation distribuée où non seulement les fonctions de commande sont distribuées sur chaque carte avec un microprocesseur par carte, mais également les fonctions de commutation avec une matrice de commutation par carte.

Le but de la présente invention est de proposer un système de commutation numérique sans unité centrale, comme dans le premier document cité, dans lequel le réseau de commutation est distribué, comme dans le second document cité, et où la sécurité de transmission des informations est renforcée

Ceci est obtenu, en particulier, par des liaisons dupliquées entre les joncteurs et une utilisation adéquate du choix offert par ces liaisons dupliquées.

Selon l'invention, il est proposé un système de commutation numérique entre n (n entier supérieur à 1) joncteurs fournissant des informations de parole et de signalisation et comportant des liaisons directes entre les joncteurs pour que chaque joncteur puisse échanger directement ses informations avec les (n - 1) autres joncteurs et chaque joncteur comporte sa propre unité de décision formée par une unité de commande avec détecteurs de pannes, caractérisé en ce que chaque joncteur comporte sa propre unité de commutation formée par un réseau de connexion numérique commandé par son unité de commande et en ce que l'ensemble des liaisons entre les joncteurs étant dupliqué, l'unité de commande de chaque joncteur choisit automatiquement celui des deux ensembles de liaisons dupliqué par lequel la transmission d'informations est correcte lorsque la transmission par l'autre ensemble dupliqué ne l'est pas, le choix s'effectuant en fonction des informations de signalisation reçues par le joncteur et d'informations de panne captées par l'unité de commande dans le joncteur considéré.

La présente invention sera mieux comprise et d'autres caractéristiques apparaîtront à l'aide de la description ci-après et des figures s'y rapportant qui représentent :
- la figure 1, un système de commutation numérique selon l'art antérieur,
- la figure 2, un système de commutation numérique selon l'invention,
- les figures 3 et 4, des vues plus détaillées de parties du système selon la figure 2.

Sur les différentes figures les dispositifs de synchronisation relevant de la technologie courante, n'ont pas été représentés en vue de rendre les dessins plus dairs et de simplifier l'exposé.

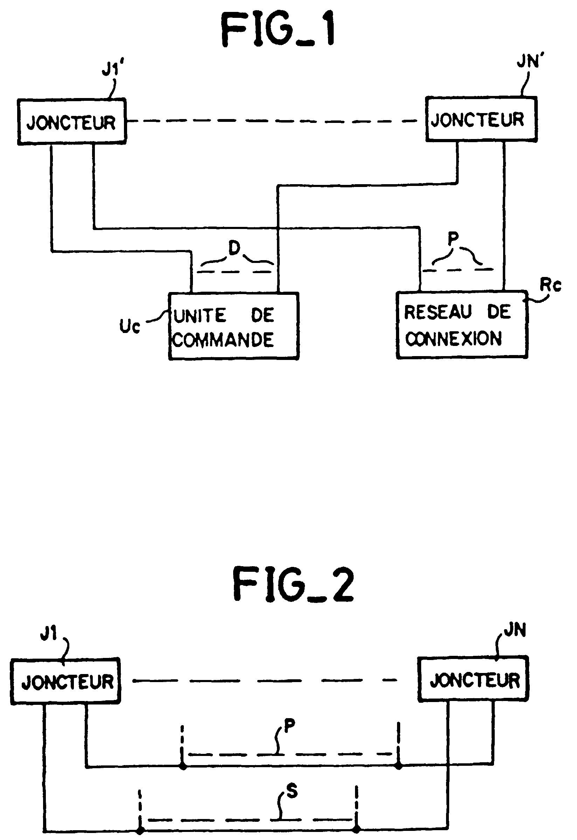

La figure 1 représente schématiquement un système de commutation selon l'art antérieur. Ce système comporte n joncteurs J1' à JN' fournissant des informations sur l'état des joncteurs, D, et des informations de parole numérisées, P. Les informations sur l'état des joncteurs, D, sont transmises, sans être traitées, à une unité de commande, Uc, réalisée à partir d'un ordinateur, qui traite les informations reçues et qui, en retour, envoie des signaux pour commander l'état des joncteurs. Les informations de parole, P, d'un joncteur sont transmises à un réseau de connexion Rc comportant une matrice de répartition spatic-temporelle assurant, sous le contrôle de l'unité de commande, Uc, le multiplexage des informations de parole et leur retransmission vers les joncteurs ; la mise en communication de deux joncteurs se fait par l'unité centrale qui commande, dans les joncteurs, le choix à faire dans les informations de parole reçues. Pour améliorer la sécurité de fonctionnement d'un tel système de commutation il est connu de dupliquer les sorties des joncteurs et de dupliquer l'unité de commande Uc et le réseau de connexion ; malgré tout l'importance en matériel et la complexité d'une unité de commande et d'un réseau de connexion font que le risque de panne totale du système, suite à une panne des deux unités de commande ou des deux réseaux de connexion, est un risque sérieux pour la sécurité de fonctionnement

La figure 2 montre comment ce risque de panne totale peut être réduit. La figure 2 représente n joncteurs J1 à JN qui se distinguent des joncteurs J1' à JN' de la figure 1 par le fait qu'ils possèdent chacun leur unité de commande et leur réseau de connexion. Les joncteurs J1 à JN peuvent ainsi échanger directement entre eux les informations de parole numérisée, P, et les informations de signalisation, S, c'est-à-dire les informations sur l'état des joncteurs, après qu'elles aient été traitées par les unités de commande relatives aux joncteurs; par échange direct d'informations entre les joncteurs on entend, ici et dans les revendications, un dialogue entre joncteurs où l'information délivrée par un joncteur est reçue telle quelle par un autre joncteur, c'est-à-dire sans avoir été traitée autrement que par des amplificateurs. Ainsi la panne de l'unité de commande ou du réseau de connexion d'un joncteur n'affecte que ce joncteur et le dialogue peut se poursuivre entre les autres joncteurs.

Les figures 1 et 2 sont des figures très simplifiées qui ne font apparaître ni la duplication de certains éléments et de certaines connexions, ni l'horloge dupliquée qui fournit les signaux de base de temps. De même sur la figure 2 n'apparaissent ni les interfaces disposées entre les joncteurs, ni l'unité de supervision rassemblant les informations sur l'état du système et dont le rôle est de faciliter la maintenance ; il est d'ailleurs à noter que ces interfaces sont des interfaces transparentes aux signaux et que l'unité de supervision pourrait éventuellement être supprimée, à l'exception de l'horloge qu'elle contient.

L'exemple concret qui va être décrit ci-après conceme un système de commutation numérique utilisant des joncteurs numériques possédant, chacun, leur unité de commande à base de microprocesseur et leur réseau de commutation numérique. Les joncteurs du système sont des joncteurs ayant chacun deux voies de parole et sont de trois types : joncteur pour poste opérateur qui interface un poste opérateur avec deux voies de parole (une voie radio et une voie téléphone), joncteur téléphonique qui assure la gestion de deux lignes de téléphone et joncteur radio qui gère deux voies radio ; en dehors de leur unité de commande et de leur réseau de commutation, qui sont d'ailleurs plus simples que l'unité de commande et le réseau de commutation correspondants de l'art connu (figure 1), la réalisation de ces joncteurs relève de la pratique courante des communications et ne sera donc pas décrite afin de ne pas surcharger le texte d'explications inutiles à la compréhension de l'invention. Il est à noter de plus que, les signaux qu'ils échangent entre eux étant semblables pour les trois types de joncteurs, il ne sera pas précisé si un joncteur considéré est du type poste opérateur, du type téléphonique ou du type radio.

D'une façon générale, dans la description de la réalisation concrète qui est prise comme exemple, les circuits à la portée de l'homme de l'art et en particulier ceux plus simples que dans l'art connu, ne seront pas détaillés pour simplifier l'exposé.

L'exemple décrit se rapporte à un système fait d'unités opérationnelles de quinze joncteurs possédant chacune leur alimentation et ce système peut comporter jusqu'à quinze unités opérationnelles représentant donc 15 × 15 = 225 joncteurs, c'est-à-dire une capacité maximale de 2 × 225 = 450 voies.

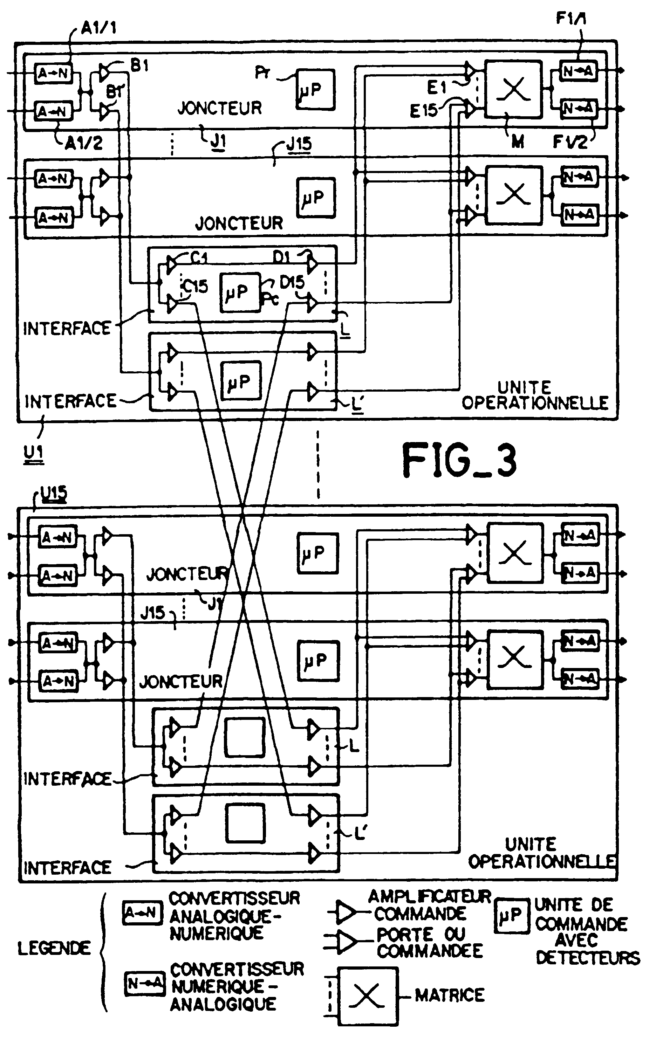

La figure 3 montre, dans le cas d'une capacité maximale, comment est câblés la partie multiplexage de parole du système de commutation numérique pris à titre d'exemple. Seule la première, U1, et la quinzième, U15, des quinze unités opérationnelles ont été représentées et, dans ces unités opérationnelles, seuls le premier et le quinzième joncteur, sur les quinze qui compte l'unité, ont été représentés ; ces joncteurs portent les références J1 à J15 dans toutes les unités opérationnelles et nécessitent donc, pour être désignés avec précision, que soit indiquée l'unité opérationnelle à laquelle ils appartiennent. Outre les quinze joncteurs chaque unité opérationnelle comporte deux interfaces qui portent les références L et L' dans toutes les unités ce qui nécessite, pour les désigner avec précision, que soit indiquée l'unité dont ils font partie.

Pour simplifier l'inscription et l'utilisation des références, seuls les éléments représentés à l'intérieur du joncteur J1 et de l'interface L de l'unité opérationnelle U1 ont été indiqués. A des différences prés qui n'apparaissent pas sur la figure 3 et qui sont dues au type de voies à commuter, les autres joncteurs et les autres interfaces comportent les mêmes éléments respectivement que ce joncteur J1 et qui cette interface L ; ceci permet de désigner, dans ce qui suit, un élément sans référence par la référence de l'élément correspondant dans J1 ou L de U1, suivie de la référence du joncteur ou de l'interface auquel il appartient ainsi que de celle de l'unité opérationnelle dans laquelle il se trouve.

Sur la partie gauche de la figure 3 sont indiqués les accès émission : deux par joncteur, correspondant aux deux voies de parole de chaque joncteur; sur la partie droite de la figure 3 sont indiqués les accès de réception des joncteurs, correspondant aux deux voies que chaque joncteur peut sélectionner parmi les 2 × 15 × 15 = 450 voies dont il a été question plus avant.

Les deux accès émission d'un joncteur correspondent respectivement aux entrées de deux convertisseurs analogiques-numériques A1/1, A1/2 qui créent chacun un intervalle de temps numérique, noté le plus souvent I.T., par souci de concision, dans ce qui suit ; ces deux I.T. sont donc les mages des deux voies propres au joncteur. Grâce à la base de temps dupliquée propre au système, 30 créneaux temporels différents sont assignés aux 2 × 15 = 30 I.T. de chaque unité opérationnelle, par les convertisseurs analogiques-numériques. A la sortie des deux convertisseurs A1/1, A1/2 les deux I.T. sont transmis sur le même conducteur et appliqués sur les entrées de deux amplificateurs commandés B1 et B1' pour être ainsi dupliqués.

Les sorties des amplificateurs B1 et celles des amplificateurs B1' des quinze joncteurs d'une unité opérationnelle sont reliées respectivement à l'entrée de l'interface L et à celle de l'interface L'; ces deux interfaces reçoivent donc chacune les 30.I.T. relatifs aux 30 accès d'émission. Chaque interface comporte 15 amplificateurs d'entrée, C1 à C15, et quinze amplificateurs de sortie, D1 à D15. Les sorties des amplificateurs C1 à C15 de l'interface L de l'unité U1 sont reliées respectivement à l'entrée de l'amplificateur D1 de l'interface de l'unité U1, à l'entrée de l'amplificateur D1 de L de U2, non représentés, et ainsi de suite jusqu'à l'entrée de l'amplificateur D1 et L de U15 ; les mêmes connexions existent entre les amplificateurs C1 à C15 de l'interface L' et les entrées des amplificateurs D1 de L' de U1, D1 de L' de U2,..., D1 de L' de U15. Des connexions semblables assurent les liaisons des amplificateurs d'entrée C1 à C15 des interfaces L et L' des unités opérationnelles U2 à U15, avec les amplicateurs de sortie D1 à D15 des interfaces L et L' des unités U1 à U15 ; c'est ainsi que les sorties des amplificateurs C1 à C15 de L' de U15 sont respectivement reliées à l'entrée de l'amplificateur D15 de L' de U1, D15 de L' de U2,..., D15 de L' de U15.

Dans chaque unité opérationnelle les sorties des amplificateurs D1 à D15 de L et de L' fournissent donc respectivement, en dupliqué, les 30 I.T. des unités U1 à U15. Chacun des 15 joncteurs de chacune des 15 unités possède son propre réseau de connexion numérique constitué par une matrice spacio-temporelle, M, à quinze accès qui sont respectivement couplés aux sorties de 15 portes OU commandées, E1 à E15; ces portes OU ont deux entrées et ces deux entrées sont reliées, pour E1, aux sorties de D1 et L et L pour E15 aux sorties D15 de L et L' ; ainsi chaque matrice M reçoit, des portes OU, D1 à D15, les 450 I.T. correspondant aux 450 voies de parole du système et peut en sélectionner deux quelconques pour les délivrer sur sa sortie.

Comme il apparaît sur la figure 3 chaque joncteur comporte sa propre unité de commande, à base de micro-ordinateur et de détecteurs, référencée Pr dans le joncteur J1 de l'unité opérationnelle U1, et chaque interface comporte également sa propre unité de commande à base de micro-ordinateur et de détecteurs, référencée Pc dans l'interface L de l'unité opérationnelle U1. C'est l'unité de commande Pr du joncteur qui, en fonction de l'état du système et des deux voies à recevoir dans le joncteur considéré, commande, pour chaque porte OU, E1 à E15, du joncteur, laquelle des deux entrées dupliquées de cette porte doit être reliée à la matrice M du joncteur. Les deux intervalles de temps ainsi sélectionnés sont traités respectivement dans deux convertisseurs numériques-analogiques, F1/1, F1/2, qui sélectionnent chacun l'un des deux I.T. grâce à un créneau temporel fourni par la base de temps du système et sous la commande de l'unité de commande propre au joncteur considéré. La sortie des convertisseurs F1/1, F1/2 restitue, sous forme analogique, le signal de la voie de parole sélectionnée.

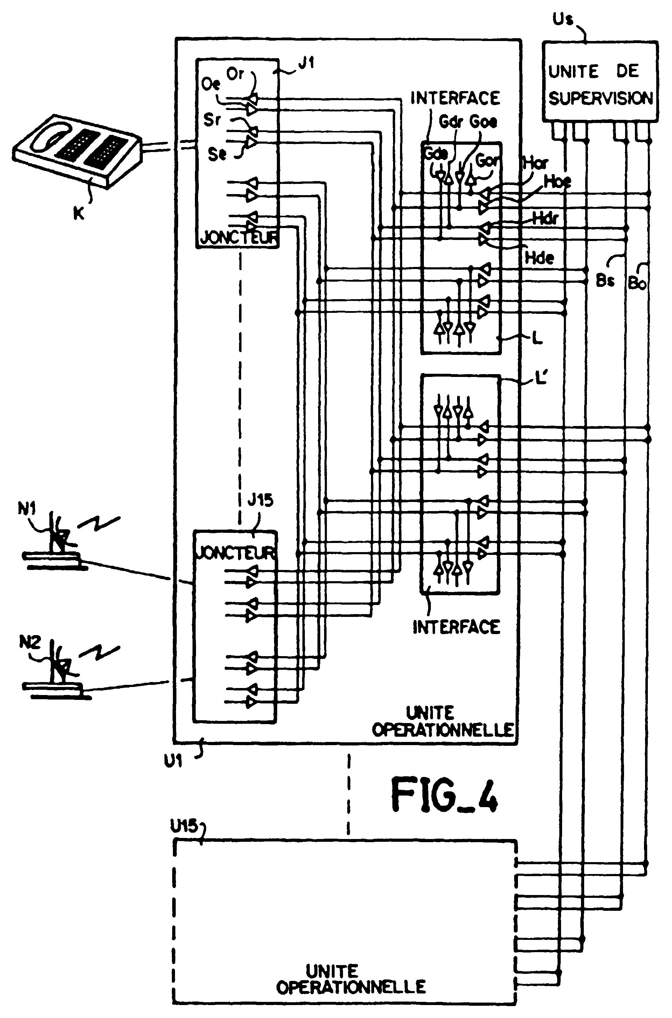

La figure 4, toujours dans le cas de l'exemple qui a commencé à être décrit à l'aide de la figure 3, montre le câblage relatif au réseau local de signalisation du système, qui permet le dialogue entre les différentes unités de commande du système par échange entre les différents joncteurs et interfaces du système et une unité de supervision Us mentionnée plus avant, d'informations sur l'état des différents joncteurs et des différentes interfaces ; chaque joncteur et chaque interface délivre les informations sur son état après les avoir traitées dans sa propre unité de commande représentée sur la figure 3 mais qui n'a pas été redessinée sur la figure 4.

Comme pour le câblage du multiplexage de parole, le réseau local de signalisation est dupliqué en un premier et un second réseau identiques, ce qui va permettre de ne décrire qu'un seul de ces réseaux dans ce qui suit Dans un souci de simplification et de clarté, seuls les éléments de la figure 4 qui ont besoin d'être désignés individuellement ont une référence. De plus, comme dans le cas de la figure 3, les 15 × 15 = 225 joncteurs du système ne présentant pas de différences, de même que les 15 × 2 = 30 interfaces, du moins en ce qui conceme le réseau local de signalisation, tout ce qui sera dit au sujet du joncteur J1 et de l'interface L de l'unité opérationnelle U1 s'appliquera respectivement aux autres joncteurs et aux autres interfaces.

La figure 4 montre l'unité opérationnelle U1 avec les interfaces L, L' et les joncteurs J1, J15 avec un poste opérateur K qui utilise les deux voies de parole du joncteur J1 et deux ensembles radio Ni, N2 qui utilisent respectivement les deux voies de parole du joncteur J15. La figure 4 représente également l'unité opérationnelle U15 et l'unité de supervision Us.

Le premier réseau local de signalisation est de topologie bus, il comporte deux lignes : une ligne de données Bs et une ligne d'occupation Bo qui indique la prise ou non du réseau local, permettant de limiter le risque de présence simultanée sur la ligne Bs de données provenant d'origines différentes ; lorsqu'un joncteur veut émettre un message il doit donc attendre que la ligne d'occupation Bo soit libre. Les lignes Bs et Bo sont reliées de façon identique aux 15 unités opérationnelles U1 à U15 et à l'unité de supervision.

Le joncteur J1 est relié par deux lignes à la ligne Bs et par deux lignes à la ligne Bo : une ligne d'émission de données avec un amplificateur commandé Se, une ligne de réception de données avec un amplificateur commandé Sr, une ligne d'occupation émission avec un amplificateur commandé Oe et une ligne d'occupation réception avec un amplificateur commandé Or. Ces lignes, à la sortie du joncteur J1, sont communes aux 14 autres joncteurs de l'unité opérationnelle. Les lignes relatives aux amplificateurs Se, Sr, Oe, Or traversent l'interface L respectivement par quatre amplificateurs commandés Hde, Hdr, Hoe et Hor, pour être reliées, pour les deux premières à la ligne de données Bs et pour les deux autres à la ligne d'occupation Bo; dans l'interface L quatre lignes équipées de quatre amplificateurs opérationnels Gde, Gdr, Goe, Gor, sont branchées en dérivation respectivement sur les lignes équipées des amplificateurs Hde, Hdr, Hoe, Hor.

L'unité de commande du joncteur J1 comporte ses détecteurs de panne permettant, si une panne est détectée sur l'un des deux réseaux dupliqués, de passer sur l'autre réseau, et, si le joncteur est en panne, de l'isoler du reste du système. Le passage d'un réseau à un autre ou l'isolement du joncteur se font par commande des portes OU E1 à E15 (figure 3) et par blocage des amplificateurs commandés du joncteur : amplificateurs B1, B1' de la figure 3 et amplificateurs Se, Sr, Oe, Or de la figure 4. Dans le cas où un court-circuit apparaît à la sortie d'un amplificateur, l'unité de commande du joncteur ne peut l'inhiber, alors les interfaces L L'de l'unité opérationnelle interviennent; leur unité de commande, Pc (figure 3), comporte des détecteurs de fautes dans les messages. Ces détecteurs permettent de déterminer si les messages provenant des 15 joncteurs de l'unité opérationnelle sont tous cohérents et, si tel n'est pas le cas, de bloquer les amplificateurs Hde, Hdr, Hoe et Hor (figure 4).

Il est à remarquer que c'est pour assurer une fiabilité plus grande et une localisation de panne plus aisés des réseaux de signalisation que, comme le montre la figure 4, chaque interface L, L' assure un isolement et une séparation en un bus émission et en un bus réception dans l'unité opérationnelle, par rapport à un seul bus émission-réception entre les différentes unités, pour les échanges d'informations de signalisation.

Il est à noter également que les signaux de base de temps fournis par l'unité de supervision Us à chaque joncteur, de manière dupliquée à travers les interfaces, sont contrôlés par des détecteurs, au niveau des interfaces et des joncteurs ; ceci permet, toujours grâce aux unités de commande des joncteurs et des interfaces, de faire fonctionner un joncteur avec n'importe laquelle des deux distributions de signaux de base de temps lorsqu'elles sont toutes les deux bonnes mais de choisir automatiquement la meilleure distribution en cas de défaut constaté sur l'autre.

La présente invention n'est pas limitée à l'exemple décrit ; c'est ainsi, en particulier, que le nombre de joncteurs par unité opérationnelle peut être différent de quinze, voire réduit à un. De même, le nombre d'unités opérationnelles d'un système de communication numérique peut être différent de quinze et éventuellement réduit à une. L'unité de surveillance, comme il a été indiqué, peut être réduite à un circuit de base de temps et donc, en fait, ne plus avoir de rôle de surveillance mais simplement un rôle de synchronisation. De même les interfaces peuvent être remplacées par de simples liaisons conductrices sans amplificateurs commandés et sans unité de commande avec détecteurs, étant entendu que la sécurité de fonctionnement sera nettement inférieure, toutes choses étant égales par ailleurs, à celle du sysstème décrit à l'aide des figures 3 et 4.

## Revendications

1. Système de commutation numérique entre n (n entier supérieur à 1) joncteurs (J1-J15) fournissant des informations de parole (P) et de signalisation (S) et comportant des liaisons directes entre les joncteurs (J1-J15) pour que chaque joncteur puisse échanger directement ses informations avec les (n-1) autres joncteurs, dans lequel chaque joncteur comporte sa propre unité de décision formée par une unité de commande avec détecteurs de pannes (Pr) et sa propre unité de commutation formée par un réseau de connexion numérique (M) commandé par son unité de commande et dans lequel l'ensemble de liaisons entre les joncteurs (J1-J15) étant dupliqué, l'unité de commande (Pr) de chaque joncteur choisit automatiquement celui des deux ensembles de liaisons par lequel la transmission d'informations est correcte lorsque la transmission par l'autre ensemble de liaisons ne l'est pas, le choix s'effectuant en fonction des informations de signalisation reçues par le joncteur et d'informations de panne captées par l'unité de commande dans le joncteur considéré, caractérisé en ce que, n étant au moins égal à 4, les joncteurs sont regroupés dans m (m entier supérieur à 1) unités opérationnelles distinctes (U1-U15) comportant chacune une interface dupliquée (L, L') et au moins deux des n joncteurs, les interfaces étant transparentes aux informations pour assurer la transmission des informations reçues par chaque interface vers l'ensemble des n joncteurs, la transmission des informations de parole s'effectuant par des échanges directes de sorties d'interface à entrées d'interface, chaque interface comportant pour cela m sorties et m entrées de parole, les m sorties de parole de l'interface i, avec compris entre 1 et m, étant respectivement reliées à m des entrées appartenant chacune à une interface différente et les liaisons entrées-sorties d'interfaces constituant une relation biunivoque entre les entrées et les sorties de parole des interfaces, et en ce que le réseau de connexion numérique (M) est formé par un organe de commutation spatio-temporel comportant m entrées dupliquées pour recevoir des informations de parole, les m entrées dupliquées des organes de commutation des joncteurs de chacune des unités opérationnelles étant reliées respectivement aux m entrées de parole de l'interface dupliquée de l'unité opérationnelle considérée.

2. Système de commutation numérique selon la revendication 1, caractérisé en ce que chaque interface comporte une unité de commande avec détecteur de cohérence des informations (Pc), pour pouvoir bloquer l'envoi par celle des deux interfaces de l'interface dupliquée considérée, d'informations jugées incohérentes.

3. Système de commutation numérique, selon l'une quelconque des revendications 1 et 2, caractérisé en ce que les liaisons entre joncteurs (J1-J15) relatives aux échanges d'informations de signalisation (S) sont dupliquées et assurent au moyen d'amplificateurs (Hde, Hdr, Hoe, Hor) une séparation en un bus émission dupliqué et un bus réception dupliqué dans l'unité opérationnelle (U1-U15) par rapport à un seul bus émission-réception (Bs, Bo) dupliqué entre les différentes unités opérationnelles.

4. Système de commutation numérique selon l'une quelconque des revendications précédentes, caractérisé en ce que chaque liaison relative aux échanges d'informations de signalisation (S) comporte deux conducteurs : un premier conducteur pour le transfert des informations proprement dites et un second conducteur sur lequel est émis un signal d'occupation par le joncteur qui émet sur le premier conducteur.

## Claims

1. System for digital switching between n (n an integer greater than 1) junctors (J1-J15) supplying speech (P) and signalling (S) data and comprising direct links between the junctors (J1-J15) so that each junctor is able to directly exchange its data with the (n-1) other junctors, in which each junctor comprises its own decision unit formed by a control unit with failure detectors (Pr) and its own switching unit formed by a digital connection network (M) controlled by its control unit and in which the set of links between the junctors (J1-J15) is duplicated, the control unit (Pr) of each junctor automatically selects that one of the two sets of links via which the data transmission is correct when the transmission via the other set of links is not correct, the selection being made as a function of the signalling data received by the junctor and of failure data picked up by the control unit in the junctor in question characterised in that, n being equal to at least 4, the junctors are grouped in m (m an integer greater than 1) separate operational units (U1-U15) each comprising a duplicated interface (L, L') and at least two of the n junctors, the interfaces being transparent to the data, in order to ensure the transmission of the data received by each interface to the set of n junctors, transmission of the speech data being effected by direct exchanges of interface outputs with interface inputs, each interface including for this purpose m outputs and m inputs for speech, the m speech outputs of interface i, with i lying between 1 and m, being respectively linked to m of the inputs each belonging to a different interface and the interface input/output links constituting a one-to-one relationship between the speech inputs and outputs of the interfaces, and in that the digital connection network (M) is formed by a spatio-temporal switching facility which includes m duplicated inputs for receiving speech data, the m duplicated inputs of the switching facilities of the junctors of each of the operational units being linked respectively to the m speech inputs of the duplicated interface of the relevant operational unit.

2. System for digital switching according to Claim 1, characterised in that each interface comprises a control unit with a detector (Pc) of coherence of data, in order to be able to block the despatching via that one of the two interfaces of the duplicated interface in question of data considered to be incoherent.

3. System for digital switching according to either of Claims 1 and 2, characterised in that the links between junctors (J1-J15), relating to the exchanges of signalling data (S), are duplicated and, by means of amplifiers (Hde, Hdr, Hoe, Hor), ensure a separation into a duplicated transmission bus and a duplicated reception bus in the operational unit (U1-U15) as compared with a single duplicated transmission/reception bus (Bs, Bo) between the various operational units.

4. System for digital switching according to any one of the preceding claims, characterised in that each link relating to the exchanges of signalling data (S) comprises two conductors: a first conductor for transfer of the data proper, and a second conductor on which a busy signal is transmitted by the junctor which is transmitting on the first conductor.

## Patentansprüche

1. Digitales Schaltsystem zwischen n (n ganzzahlig und größer als 1) Verbindungsstellen (J1-J15), die Sprach (P)- und Signalgebungs (S)-Informationen liefern, das direkte Verbindungen zwischen den Verbindungsstellen (J1-J15) aufweist, damit jede Verbindungsstelle ihre Informationen direkt mit den (n-1) anderen Verbindungsstellen austauschen kann, wobei jede Verbindungsstelle ihre eigene Entscheidungseinheit, die von einer Steuereinheit mit Ausfalldetektoren (Pr) gebildet wird, und ihre eigene Schalteinheit enthält, die von einem von ihrer Steuereinheit gesteuerten digitalen Verbindungsnetz (M) gebildet wird, und in dem die Gesamtheit der Verbindungen zwischen den Verbindungsstellen (J1-J15) doppelt vorgesehen ist, wobei die Steuereinheit (Pr) einer jeden Verbindungsstelle automatisch diejenige der doppelt vorgesehenen Verbindungsgesamtheiten auswählt, von der die Informationen richtig übertragen werden, wenn die Übertragung von der anderen der doppelt vorgesehenen Verbindungsgesamtheiten nicht richtig ist, wobei die Wahl in Abhängigkeit von den von der Verbindungsstelle empfangenen Signalgebungsinformationen und von den von der Steuereinheit in der betrachteten Verbindungsstelle aufgenommenen Ausfallinformationen ausgeführt wird, dadurch gekennzeichnet, daß dann, wenn n mindestens gleich 4 ist, die Verbindungsstellen (J1-J15) in m (m ganzzahlig und größer als 1) verschiedene Betriebseinheiten (U1-U15) zusammengefaßt sind, von denen jede eine verdoppelte Schnittstelle (L, L') und wenigstens zwei der n Verbindungsstellen enthält, wobei die Schnittstellen für die Informationen durchlässig sind, um die Übertragung der von jeder Schnittstelle empfangenen Informationen zu der Gesamtheit der m Verbindungsstellen zu gewährleisten, wobei die Übertragung der Sprachinformationen durch direkten Austausch von Schnittstellenausgängen zu Schnittstelleneingängen erfolgt, wozu jede Schnittstelle m Sprachausgänge und m Spracheingänge aufweist, wobei die m Sprachausgänge der Schnittstelle i, mit i zwischen 1 und m, mit m der Eingänge verbunden sind, die jeweils zu einer anderen Schnittstelle gehören, und die Schnittstellen-Eingangs-Ausgangs-Verbindungen eine umkehrbar eindeutige Beziehung zwischen den Spracheingängen und -ausgängen der Schnittstellen bilden, und daß das digitale Verbindungsnetz (M) durch ein Organ zur räumlich-zeitlichen Umschaltung gebildet ist, das m verdoppelte Eingänge zum Empfang der Sprachinformationen aufweist, wobei die m verdoppelten Eingänge der Umschaltorgane jeder der Betriebseinheiten mit den m Spracheingängen der verdoppelten Schnittstelle der betreffenden Betriebseinheit verbunden sind.

2. Digitales Schaltsystem gemäß Anspruch 1, dadurch gekennzeichnet, daß jede Schnittstelle eine Steuereinheit mit Informationskohärenzdetektor (Pc) umfaßt, damit die Lieferung von als inkohärent beurteilten Informationen über die betrachtete Schnittstelle blockiert werden kann.

3. Digitales Schaltsystem gemäß einem der Ansprüche 1 und 2, dadurch gekennzeichnet, daß die Verbindungen zwischen den Verbindungsstellen (J1-J15), die auf den Austausch von Signalgebungsinformationen (S) bezogen sind, verdoppelt sind und mittels Verstärkern (Hde, Hdr, Hoe, Hor) eine Trennung in einen verdoppelten Sendebus und einen verdoppelten Empfangsbus in der Betriebseinheit (U1-U15) gegenüber einem einzigen verdoppelten Sende/Empfangs-Bus (Bs, Bo) zwischen den verschiedenen Betriebseinheiten gewährleisten.

4. Digitales Schaltsystem gemäß einem der vorangehenden Ansprüche, dadurch gekennzeichnet, daß jede auf den Austausch von Signalgebungsinformationen (S) bezogene Verbindung zwei Leiter umfaßt: einen ersten Leiter für die Übertragung der eigentlichen Informationen und einen zweiten Leiter, auf dem von der auf dem ersten Leiter sendenden Verbindungsstelle ein Besetztsignal ausgegeben wird.
